# EUROPEAN PATENT APPLICATION

(11) **EP 4 283 155 A1**
(43) Date of publication of application: **29.11.2023**
(21) Application number: 22175376.7
(22) Date of filing: 25.05.2022
(51) Int. Cl.: F16D 65/00, F16D 65/847, F16D 65/12

(54) **AIR GUIDING ARRANGEMENT COMPRISING A FILTER FOR A DISC BRAKE, AND DISC BRAKE COMPRISING A RESPECTIVE AIR GUIDING ARRANGEMENT**

(71) Applicant: ZF CV Systems Europe BV, 1170 Brüssel (BE)
(72) Inventor: MARKO, Piotr, 46-100 Namyslow (PL)
(74) Representative: Ohlendorf, Henrike

(57) **Abstract**

An air guiding arrangement (16) for a disc brake (2) of a vehicle (16) comprises a structure element (18, 20) surrounding a lower side (22) of a brake rotor (14) of the vehicle, an air supply (30) with an air inlet (32) for guiding air into the structure element (18, 20), and a filter (56) disposed within the structure element (18, 20) for absorbing dust particles generated during a braking process of the disc brake (2).

## Description

The invention relates to an air guiding arrangement of a disc brake of a vehicle, and to a disc brake comprising a respective air guiding arrangement.

Disc brakes are widely used in brake systems of vehicles, in particular of commercial vehicles like heavy trucks, buses, and trailers. A disc brake comprises for example a brake caliper and a brake carrier including two brake pads. When a driver of the vehicle pushes a brake pedal of the brake system, a pressurized hydraulic medium of the brake system is provided, which causes an activation of a clamping unit of the disc brake, which subsequently pushes the brake pads against a disc rotor that is connected with a wheel of the vehicle. The brake pads clamp at the disc rotor at both sides, which creates friction, slows down the wheel, and decelerates the vehicle.

US 2005/0145455 A1 discloses a brake cooling system that directs cooling air to a vehicle brake assembly. The cooling system includes an air supply that, during operation of the vehicle, receives air, pressurizes air, and directs pressurized air to the brake assembly. The air guide cooperates with a support structure, such as a wheel well liner, provided by the vehicle to define an air passageway that is gradually reduced in cross-section toward the distal end of the air guide so as to transform a relatively low pressure incoming air stream into a relatively higher pressure outgoing air stream. The outgoing air stream is focused on the brake assembly to thereby cool the brake assembly.

DE 10 2013 108 380 A1 discloses an air guiding arrangement on a wheel carrier of a front axle or rear axle of a motor vehicle for supplying air to a brake caliper and to a brake disc of a vehicle brake, wherein at least one air guiding element with an air guiding duct is arranged on at least one wheel control arm, and wherein the air guiding duct has a closed cross section and an inlet area pointing in the direction of travel. The air guiding arrangement provides a cooling of the brake caliper and the brake disc.

DE 10 2013 224 447 A1 discloses a vehicle brake cooling system comprising an inlet, which is positioned to access a flow of air passing around and under a moving vehicle to draw in air which is conveyed through a duct and discharged to cool a brake of the vehicle.

US 9,004,241 B2 discloses a device for delivering cooling air on demand to a vehicle brake. The device comprises a duct with an inlet, which is positionable on the vehicle to access an air flow passing around a vehicle exterior. The duct and the inlet cooperate to transport air from the vehicle exterior to one or more vehicle brakes. The device further comprises a closure located in the duct or inlet, which denies and allows passage of cooling air in dependency of a temperature sensor.

It is an object of the present invention to provide an air guiding arrangement and a disc brake comprising a respective air guiding arrangement, which allow reducing an environmental pollution.

The invention is as set out in the independent claims 1 and 12. Preferred embodiments are defined by the dependent claims.

The air guiding arrangement for a disc brake of a vehicle comprises a structure element surrounding a lower side of a brake rotor of the vehicle, an air supply with an air inlet for guiding air into the structure element, and a filter disposed within the structure element for absorbing dust particles generated during a braking process of the disc brake.

In a preferred embodiment, the structure element comprises a first part and a second part, which parts form a U-shaped, circular duct surrounding the lower side of the brake rotor, without contacting the brake rotor.

In another preferred embodiment, the first part has a form of a curved angle plate and the second part has a form of a curved angle plate or of a planar plate disposed at the first part.

In another preferred embodiment, the second part comprises a hole at which the air supply is disposed.

In another preferred embodiment, the first part has a form of a curved angle plate having a flat first side designed to be positioned in parallel to an outer friction side of the brake rotor and having a curved second side designed to be disposed in parallel to a lateral surface of the brake rotor.

In another preferred embodiment, the filter is positioned at the second side of the first part.

In another preferred embodiment, the first and second parts each comprise a recess for a wheel hub of the vehicle, wherein the second part is designed to be positioned in parallel to an inner friction side of the brake rotor.

In another preferred embodiment, the first part and the second part each comprise one or several fixing holes designed for mounting the air guiding arrangement at a brake carrier of the disc brake.

In another preferred embodiment, the air guiding arrangement comprises fixing means designed for mounting the air guiding arrangement at a structure part of the vehicle.

In another preferred embodiment, the filter includes a filter cloth comprising at least one of the materials polyester fiber, polymer fiber, carbon fiber, and glass fiber.

In another preferred embodiment, the air supply has a form of a bowed circular tube, wherein the air inlet is arranged to be directed in a front direction of the vehicle.

The filter of the air guiding arrangement has a function of a dust collector for the disc brake, protecting the environment against a pollution by the brake pads.

In another aspect of the invention, a disc brake comprises a respective air guiding arrangement.

In a preferred embodiment, the disc brake comprises a brake carrier and the air guiding arrangement is mounted at the brake carrier.

The disc brake is in particular an air disc brake of a commercial vehicle.

Preferred embodiments of the disclosure are explained in more detail below by way of example with reference to schematic drawings, which show:
- Fig. 1: an air guiding arrangement, a disc brake and a brake rotor of a vehicle; and
- Fig. 2: the air guiding arrangement, the disc brake and the brake rotor of Fig. 1 in a cross section.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for instructional purposes to aid the reader in understanding the principles of the disclosure and the concepts contributed by the inventors to furthering the art and are to be construed as being without limitation to such specifically recited examples and conditions. Moreover, all statements herein reciting principles, aspects, and embodiments of the disclosure, as well as specific examples thereof, are intended to encompass both structural and functional equivalents thereof.

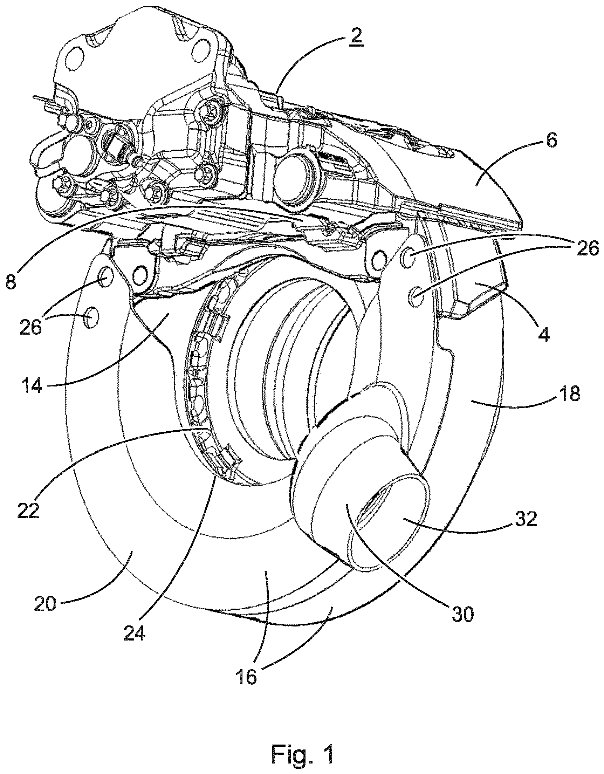

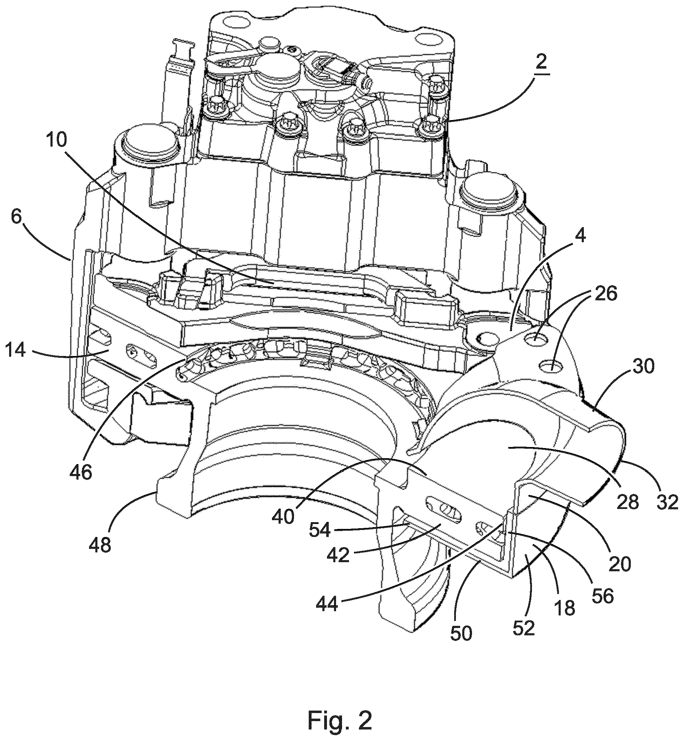

Fig. 1 depicts a disc brake 2 and a brake rotor 14 of a vehicle, in particular of a commercial vehicle. The disc brake 2 comprises a brake carrier 4, a brake caliper 6 and a clamping unit 8. The disc brake 2 further comprises two brake pads 10, shown in Fig. 2, which are arranged at or on the brake carrier 4 in an axially movable manner. In Fig. 2, only the inner brake pad 10 is visible. The brake caliper 6 is disposed above the brake rotor 14 of the vehicle for enabling a braking process of a wheel of the vehicle being connected with the brake rotor 14.

The disc brake 2 comprises in addition an air guiding arrangement 16 comprising a structure element with a first part 18 and a second part 20, wherein the structure element has a form of a U-shaped, circular duct or channel, which essentially encloses a lower side 22 of the brake rotor 14. The first part 18 has a form of a curved angle plate and the second part 20 has also a form of a curved angle plate with a recess 24. The second part 20 is disposed at the first part 18 such that the parts 18 and 20 partly overlap, so that both parts 18 and 20 provide an enclosure for the lower side 22 of the brake rotor 14, without contacting the brake rotor 14.

The second part 20 comprises several holes, in this embodiment four fixing holes 26 for mounting the second part 20 at the brake carrier 4. In this embodiment, the first part 18 is also mounted at the brake carrier 4. For example, the first part 18 comprises corresponding holes for mounting the first part 18 at the brake carrier 4.

In another embodiment, an air guiding arrangement comprises a first and a second part for providing an enclosure for the lower side 22 of the brake rotor 14, wherein the first part is fixed at a structure part of the vehicle and the second part is fixed at the first part.

The second part 20 comprises a hole 28, shown in Fig. 2, at which an air supply 30 is disposed for guiding air into the duct of the air guiding arrangement 16, when the vehicle is moved, to provide a cooling of the brake rotor 14 and the brake carrier 4. The air supply 30 comprises an air inlet 32, wherein the air supply 30 in this embodiment has a form of a bowed circular tube. The air inlet 32 is directed particularly in a front direction of the vehicle, so that the air inlet 30 collects air when the vehicle is moved in a forward direction.

Fig. 2 shows the disc brake 2, the brake rotor 14 and the air guiding arrangement 16 in a cross section. The brake rotor 14 has a form of a flat cylinder having an inner friction side 40 being directed towards a middle of the vehicle, an outer friction side 42 being directed to an outside of the vehicle and a lateral surface 44. In this embodiment, the brake rotor 14 further comprises a hole 46 in its centre, at which a wheel hub 48 of the vehicle is connected. The disc brake 2 surrounds the brake rotor 14 at an upper side of the brake rotor 14 and the air guiding arrangement 16 encapsulates the brake rotor 14 at its lower side, so that the brake rotor 14 is essentially shielded against an outer environment.

The first part 18 of the air guiding arrangement 16 has a form of a curved angle plate, wherein a first side 50 of the first part 18 is flat and positioned in parallel to the outer friction side 42 of the brake rotor 14. A curved second side 52 of the first part 18 is disposed in parallel to the lateral surface 44 of the brake rotor 14. The first part 18 of the air guiding arrangement 16 comprises a recess 54 for the wheel hub 48 and is positioned in parallel to the inner friction side 40 of the rotor brake 14.

The air guiding arrangement 16 further comprises a filter 56 that is disposed within the air guiding arrangement 16 for absorbing dust particles generated during a braking process of the disc brake 2. The filter 56 is, for example, a filter cloth comprising at least one of the materials polyester fiber, polymer fiber, carbon fiber, and glass fiber.

During the braking process, friction is provided by the brake pads 10 and 12 at the brake rotor 14, which leads to a wear of the brake pads 10, 12 in a form of dust particles. The filter 56 is positioned in this embodiment at the second side 52 of the first part 18, within a hollow space between the lateral surface 44 of the brake rotor 14 and the second side 52 of the first part 18. The filter 56 therefore has a function of a dust collector for the disc brake 2, protecting the environment against a pollution of dust particles generated by the brake pads 10, 12.

The filter 56 can be easily replaced after it has collected some amount of dust, by unscrewing and removing the first part 18 or the second part 20, so that the filter 56 can be taken out and a new filter can be inserted into the air guiding arrangement 16. Consecutively, the air guiding arrangement 16 can be closed again by screwing the second part 20 at the brake carrier 4. The replacement of the filter 56 can be done also for example at the same time when the brake pads 10 and 12 have to be replaced.

Also other embodiments may be utilized by one skilled in the art without departing from the scope of the present disclosure. The disclosure resides therefore in the claims herein after appended.

### List of Reference signs (part of the specification):

- 2: disc brake
- 4: brake carrier
- 6: brake caliper
- 8: clamping unit
- 10: brake pads
- 14: brake rotor
- 16: air guiding arrangement
- 18, 20: parts of the air guiding arrangement 16
- 22: lower side of the brake rotor 14
- 24: recess of the second part 20
- 26: fixing holes
- 28: hole of the second part 20
- 30: air supply
- 32: air inlet of the air supply 30
- 40: inner friction side of the brake rotor 14
- 42: outer friction side of the brake rotor 14
- 44: lateral surface of the brake rotor 14
- 46: hole of the brake rotor 14
- 48: wheel hub
- 50, 52: sides of the first part 18
- 54: recess of the first part 18
- 56: filter

## Claims

1. An air guiding arrangement (16) for a disc brake (2) of a vehicle, wherein the air guiding arrangement (16) comprises
a structure element (18, 20) surrounding a lower side (22) of a brake rotor (14) of the vehicle;
an air supply (30) with an air inlet (32) for guiding air into the structure element (18, 20); and
a filter (56) disposed within the structure element (18, 20) for absorbing dust particles generated during a braking process of the disc brake (2).

2. The air guiding arrangement (16) of claim 1, wherein the structure element (18, 20) comprises a first part (18) and a second part (20), which parts form a U-shaped, circular duct surrounding the lower side (22) of the brake rotor (14), without contacting the brake rotor (14).

3. The air guiding arrangement (16) of claim 2, wherein the first part (18) has a form of a curved angle plate and the second part (20) has a form of a curved angle plate or of a planar plate disposed at the first part (18).

4. The air guiding arrangement (16) of claim 2 or 3, wherein the second part (20) comprises a hole (28), at which the air supply (30) is disposed.

5. The air guiding arrangement (16) of one of claims 2 to 4, wherein the first part (18) has a form of a curved angle plate having a flat first side (50) designed to be positioned in parallel to an outer friction side (42) of the brake rotor (14) and having a curved second side (52) designed to be disposed in parallel to a lateral surface (44) of the brake rotor (14).

6. The air guiding arrangement (16) of claim 5, wherein the filter (56) is positioned at the second side (52) of the first part (18).

7. The air guiding arrangement (16) of one of claims 2 to 6, wherein the first and second parts (18, 20) each comprise a recess (54, 24) for a wheel hub (48) of the vehicle, and wherein the second part (20) is designed to be positioned in parallel to an inner friction side (40) of the brake rotor (14).

8. The air guiding arrangement (16) of one of claims 2 to 7, wherein the first part (18) and the second part (20) each comprise one or several fixing holes (26) designed for mounting the air guiding arrangement (16) at a brake carrier of the disc brake (2).

9. The air guiding arrangement (16) of one of claims 2 to 7, wherein the air guiding arrangement (16) comprises fixing means (26) designed for mounting the air guiding arrangement (16) at a structure part of the vehicle.

10. The air guiding arrangement (16) of one of the preceding claims, wherein the filter (56) includes a filter cloth comprising at least one of the materials polyester fiber, polymer fiber, carbon fiber, and glass fiber.

11. The air guiding arrangement (16) of one of the preceding claims, wherein the air supply (30) has a form of a bowed circular tube, and wherein the air inlet (32) is arranged to be directed in a front direction of the vehicle.

12. A disc brake (2) comprising an air guiding arrangement (16) according to one of the preceding claims.

13. The disc brake (2) of claim 12, comprising a brake carrier (4), wherein the air guiding arrangement (16) is mounted at the brake carrier (4).

14. The disc brake (2) of claim 12 or 13, wherein the disc brake (2) is an air disc brake of a commercial vehicle.
